# EUROPÄISCHE PATENTANMELDUNG

(11) **EP 3 959 959 A1**
(43) Veröffentlichungstag der Anmeldung: **02.03.2022**
(21) Anmeldenummer: 21181157.5
(22) Anmeldetag: 23.06.2021
(51) Int. Cl.: A01D 61/00, A01D 57/12, A01D 41/14

(54) **MÄHDRESCHER**

(30) Priorität: 24.08.2020 DE 102020122014
(71) Anmelder: CLAAS Selbstfahrende Erntemaschinen GmbH, 33428 Harsewinkel (DE)
(72) Erfinder: Wernsmann, Thomas, 33428 Harsewinkel (DE)
(74) Vertreter: CLAAS Gruppe

(57) **Zusammenfassung**

Die vorliegende Anmeldung betrifft einen Mähdrescher (1), umfassend ein Schneidwerk (2) zum Schneiden und Weiterleiten von auf einem Feld aufstehenden Pflanzen (3) sowie einen Schrägförderer (4) zur Förderung der Pflanzen in Richtung eines Dreschorgans (5), wobei das Schneidwerk (2) mindestens eine sich parallel zu einer Längsachse (6) des Schneidwerks (2) erstreckende Fördereinrichtung (7) aufweist, mittels der geschnittene Pflanzen ausgehend von Seitenbereichen (8, 9) des Schneidwerks (2) in Richtung eines Mittelbereichs (10) des Schneidwerks (2) förderbar sind, wobei das Schneidwerk (2) mindestens eine Übergabeeinrichtung aufweist, mittels der geschnittene Pflanzen ausgehend von dem Mittelbereich (10) an den Schrägförderer (4) übergebbar sind, dadurch gekennzeichnet, dass die Übergabeeinrichtung in Form eines Raffers (11) ausgebildet ist, der dazu eingerichtet ist, die geschnittenen Pflanzen anzunehmen und an den Schrägförderer (4) zu übergeben.

Um einen Mähdrescher bereitzustellen, bei dem der Gutfluss des jeweiligen Ernteguts von dem Schneidwerk hin zu den Schrägförderer gegenüber dem Stand der Technik verbessert ist, wird erfindungsgemäß vorgeschlagen, dass die Übergabeeinrichtung in Form eines Raffers (11) ausgebildet ist, der dazu eingerichtet ist, die geschnittenen Pflanzen anzunehmen und an den Schrägförderer (4) zu übergeben.

## Beschreibung

Die vorliegende Anmeldung betrifft einen Mähdrescher gemäß dem Oberbegriff von Anspruch 1.

Der Mähdrescher umfasst ein Schneidwerk, mittels dessen auf einem Feld aufstehende Pflanzen abgeschnitten und weitergeleitet werden können. Die abgeschnittenen Pflanzen bilden fortan das Erntegut. Das Erntegut kann sodann in Breitenrichtung des Mähdreschers, d.h. in eine Längsrichtung des Schneidwerks betrachtet, zusammengeführt werden, was aufgrund der typischerweise eine Breite des übrigen Mähdreschers deutlich übersteigenden Länge des Schneidwerks erforderlich ist, um die geschnittenen Pflanzen ausgehend von Seitenbereichen des Schneidwerks in Richtung eines Mittelbereichs des Schneidwerks zu fördern. Ferner umfasst der Mähdrescher einen Schrägförderer, mittels dessen die geschnittenen Pflanzen von dem Schneidwerk übernehmbar und in Richtung eines Dreschorgans förderbar sind. Das Schneidwerk ist derart mittig dem Schrägförderer zugeordnet, dass der Mittelbereich des Schneidwerks mit dem Schrägförderer korrespondiert.

Für die Förderung des Ernteguts in eine Richtung parallel zu einer Längsachse des Schneidwerks verfügt selbiges über eine sich parallel zu der Längsachse erstreckende Fördereinrichtung. Diese kann insbesondere von einer Förderschnecke gebildet sein, was bei konventionellen Schneidwerken üblich ist. Alternativ sind ebenfalls sogenannte "Draper-Schneidwerke" bekannt, bei denen die Förderung des Ernteguts in Längsrichtung des Schneidwerks mittels Transportbändern erfolgt. In jedem Fall wird das Erntegut in einem Mittelbereich des Schneidwerks vereint und von dort an den Schrägförderer weitergegeben. Aus diesem Grund ist es erforderlich, dass das Erntegut ausgehend von den Seitenbereichen in einander entgegengesetzte Richtungen transportiert werden, nämlich jeweils auf den Mittelbereich des Schneidwerks zu.

Schließlich umfasst das Schneidwerk mindestens eine Übergabeeinrichtung, mittels der das Erntegut ausgehend von dem Mittelbereich an den Schrägförderer übergebbar ist. Eine solche Übergabeeinrichtung kann insbesondere eine Einzugswalze umfassen, die mit einer Mehrzahl von Einzugsfingern ausgestattet ist. Letztere sind dazu geeignet, das von den Seitenbereichen zugeführte Erntegut zu erfassen und in Richtung einer Übergabeöffnung, die an einer Rückseite des Schneidwerks ausgebildet ist, zu leiten, sodass das Erntegut durch die Übergabeöffnung hindurch dem Schrägförderer übergeben werden kann.

Mähdrescher der vorstehend genannten Art sind im Stand der Technik bereits bekannt. Hierzu wird beispielhaft auf die US-Patentanmeldung 2019/0200525 A1 hingewiesen. Besagte Anmeldung beschreibt eine Übergabeeinrichtung mit einer Einzugswalze, die mit einer Vielzahl von Einzugsfingern ausgestattet ist. Diese erstrecken sich ausgehend von einer inneren Welle durch Öffnungen eines äußeren Mantels der Einzugswalze hindurch, wobei eine effektive Länge der Einzugsfinger, mit der diese über den Mantel hinaus vorstehen, sich in Abhängigkeit einer Winkelstellung der Einzugswalze fortwährend verändert, da die Welle exzentrisch zu dem Mantel angeordnet ist. Die Exzentrizität ist derart eingestellt, dass die effektive Länge der Einzugsfinger in einem von der Übergabeöffnung bzw. dem Schrägförderer abgewandten Bereich der Übergabeeinrichtung maximal und in einem der Übergabeöffnung zugewandten Bereich minimal ist.

Die bekannte Ausgestaltung ist insoweit nachteilig, als die Übergabeeinrichtung in dem Bereich unmittelbar an der Übergabeöffnung aufgrund der minimalen effektiven Länge der Einzugsfinger kaum eine Förderwirkung auf das Erntegut ausüben kann. Der Gutfluss der Pflanzen ist in diesem kritischen Bereich, in dem die Übergabe an den Schrägförderer stattfindet, nicht optimal.

Der vorliegenden Anmeldung liegt mithin die Aufgabe zugrunde, einen Mähdrescher bereitzustellen, bei dem der Gutfluss des jeweiligen Ernteguts von dem Schneidwerk hin zu den Schrägförderer gegenüber dem Stand der Technik verbessert ist.

Die zugrunde liegende Aufgabe wird erfindungsgemäß mit einem Mähdrescher mit den Merkmalen des Anspruchs 1 gelöst. Vorteilhafte Ausgestaltungen ergeben sich aus den zugehörigen Unteransprüchen.

Der erfindungsgemäße Mähdrescher ist dadurch gekennzeichnet, dass die Übergabeeinrichtung in Form eines Raffers ausgebildet ist, der dazu eingerichtet ist, das von den geschnittenen Pflanzen gebildete Erntegut anzunehmen und an den Schrägförderer zu übergeben. Derartige Raffer sind insbesondere von Ballenpressen, insbesondere Quaderballenpressen, bekannt.

Der erfindungsgemäße Mähdrescher hat viele Vorteile. Mittels des Raffers kann das in den Mittelbereich gelangende Erntegut, d.h. die geschnittenen Pflanzen, erfasst und in Richtung der Übergabeöffnung umgelenkt werden. Die Ausgestaltung der Übergabeeinrichtung als Raffer bietet dabei den besonderen Vorteil, dass eine Wirkungsbahn, auf der der Raffer mit dem Erntegut zusammenwirkt und insbesondere Transportkräfte auf das Erntegut aufbringen kann, von einer Kreisform beispielsweise hin zu einem liegenden Oval abweichen kann. Entsprechend ist es mittels eines Raffers gegenüber einer im Stand der Technik typischen Einzugswalze einfacher, in Breitenrichtung des Schneidwerks betrachtet einen größeren effektiven Förderbereich abzudecken und auf diese Weise den Gutfluss des Ernteguts hin zu dem Schrägförderer deutlich zu verbessern.

In einer vorteilhaften Ausgestaltung umfasst der Raffer eine Mehrzahl von Rafferzinken, die an einer Rafferbasis gelagert sind. Insbesondere können sich die Rafferzinken jeweils parallel zueinander sowie einseitig ausgehend von der Rafferbasis erstrecken, wobei die Rafferzinken beispielsweise entlang einer Längsachse der Rafferbasis nebeneinander angeordnet sind. Auf diese Weise ist der Raffer besonders gut geeignet, durch Wirkung der Rafferzinken ähnlich einer Gabel das Erntegut zu erfassen und zu fördern.

Zwecks Bewegung des Raffers kann es besonders vorteilhaft sein, wenn selbiger mit einem Kurbeltrieb zusammenwirkt, der einen um eine Kurbelachse drehantreibbaren Kurbelarm umfasst. Hierbei ist der Raffer unter Ausbildung eines Rafferdrehgelenks an dem Kurbelarm gelagert, sodass der Raffer um das Rafferdrehgelenk relativ zu dem Kurbelarm drehbar ist. Der Kurbelarm ist seinerseits mittels eines Kurbeldrehgelenks sowie eines zugeordneten Antriebs auf einer Kreisbahn um eine Kurbelachse drehantreibbar. Die Kurbelachse kann dabei insbesondere exzentrisch zu einer Längsachse der Fördereinrichtung des Schneidwerks angeordnet sein. Eine solche Exzentrizität ist besonders gut dazu geeignet, eine Kurvenbahn, auf der letztlich der Raffer seine das Erntegut fördernde Wirkung entfaltet, einzustellen. Vorzugsweise ist zudem das Rafferdrehgelenk beabstandet von der Kurbelachse angeordnet sowie parallel zu der Kurbelachse orientiert. Insbesondere können die Kurbelachse und das Rafferdrehgelenk an einander gegenüberliegenden Enden des Kurbelarms ausgebildet sein. Aufgrund der Lagerung des Rafferdrehgelenks in einem Abstand zu dem Kurbeldrehgelenk wird das Rafferdrehgelenk mitsamt dem daran gelagerten Raffer im Zuge des Betriebs des Kurbeltriebs auf einer Kreisbahn um die Kurbelachse geführt.

In einer besonders vorteilhaften Ausgestaltung ist der Mähdrescher dazu eingerichtet, dass eine Drehzahl des Raffers im Zuge des Betriebs des Mähdreschers geringer ist als eine Drehzahl der Fördereinrichtung, wobei vorzugsweise ein Verhältnis der Drehzahl der Fördereinrichtung zu der Drehzahl des Raffers bei mindestens 2:1, vorzugsweise mindestens 3:1, weitere vorzugsweise mindestens 4:1, liegt. Eine solche Ausgestaltung trägt dazu bei, die auf den Raffer wirkenden Kräfte zu begrenzen, ohne dass hierdurch der Gutfluss des Ernteguts negativ beeinflusst wird.

Die vorstehend jeweils für sich als vorteilhaft beschriebenen Ausführungen des erfindungsgemäßen Mähdreschers, bei dem zum einen der Raffer eine Mehrzahl von an einer Rafferbasis angeordneten Rafferzinken umfasst und zum anderen der Raffer mit einem Kurbeltrieb zusammenwirkt, sind insbesondere in Kombination besonders vorteilhaft. Dies hat nämlich den Effekt, dass der Raffer mittels des Kurbeltriebs auf einer Kreisbahn um die Kurbelachse bewegbar ist, während der Raffer als solcher mitsamt seinen Rafferzinken um das Rafferdrehgelenk verdrehbar an dem Kurbelarm gelagert ist. Mithin können Zinkenspitzen der Rafferzinken auf einer Kreisbahn um die Gelenksachse des Rafferdrehgelenks bewegt werden. Diese doppelte rotatorische Bewegbarkeit des Raffers führt dazu, dass die Rafferzinken effektiv auf einer Kurvenbahn führbar sind, die von einer Kreisbahn abweicht. Dies liegt darin begründet, dass sich die beiden Kreisbahnen des Kurbeltriebs um die Kurbelachse und des Raffers um die Gelenkachse des Rafferdrehgelenks überlagern können, sodass insbesondere eine ellipsoide Kurvenbahn, beispielsweise in Form eines Ovals, gebildet werden kann, auf der endseitige Zinkenspitzen der Rafferzinken umlaufen. Insbesondere kann die Kurvenbahn die Form einer Ellipse, insbesondere eines liegenden Ovals, annehmen. Eine solche Kurvenbahn weist in Breitenrichtung des Schneidwerks betrachtet eine größere Erstreckung auf als in Höhenrichtung des Schneidwerks betrachtet. Dies hat den besonderen Vorteil, dass die Rafferzinken sowohl bei Vorliegen des Raffers in seiner maximal von dem Schrägförderer entfernten Stellung ("Ausholstellung") als auch in seiner minimal von dem Schrägförderer entfernten Stellung ("Förderstellung") eine Förderwirkung auf das Erntegut ausüben können. Die Förderleistung des Raffers bezogen auf das Erntegut ist bei dieser Ausgestaltung besonders hoch.

In einer besonders vorteilhaften Weiterbildung des erfindungsgemäßen Mähdreschers umfasst dieser mindestens eine Führungseinrichtung, die unter Ausbildung eines Führungsdrehgelenks an den Raffer angeschlossen ist. Mithin ist die Führungseinrichtung relativ verdrehbar zu dem Raffer ausgebildet. Dabei sind Gelenkachsen des Rafferdrehgelenks und des Führungsdrehgelenks parallel zueinander orientiert sowie voneinander beabstandet. Die Führungseinrichtung ermöglicht eine eindeutige Führung des Raffers betreffend seine Drehstellung bezogen auf das Rafferdrehgelenk im Raum. Dies hat zur Folge, dass der Raffer bei seinem Umlauf um die Kurbelachse zu jedem Zeitpunkt in einer eindeutigen Drehstellung bezogen auf die Gelenksachse des Rafferdrehgelenks geführt ist. In der Zusammenwirkung des Raffers zum einen mit dem Kurbeltrieb und zum anderen mit der Führungseinrichtung kann entsprechend der Raffer so eingestellt werden, dass die Rafferzinken mit den zugehörigen Zinkenspitzen bei Vorliegen des Raffers in einer maximal von dem Schrägförderer beabstandeten Aushohlstellung von dem Schrägförderer weg gestreckt vorliegen, während die Rafferzinken bei Vorliegen in einer minimal von dem Schrägförderer beabstandeten Förderstellung sich auf den Schrägförderer zu erstrecken. Eine Kurvenbahn, auf der die Zinkenspitzen der Rafferzinken umlaufen, kann auf diese Weise besonders "breit" (in Breitenrichtung des Schneidwerks betrachtet) gestaltet werden, sodass sich ein Wirkungsbereich des Raffers in Breitenrichtung des Schneidwerks betrachtet möglichst weit erstreckt. Diese Ausgestaltung trägt dazu bei, dass der Raffer jeweiliges Erntegut besonders gut erfassen und sodann besonders effektiv an den Schrägförderer übergeben kann, wobei der Raffer das Erntegut vereinfacht gesagt "weit weg" von dem Schrägförderer übernehmen und bis "nah ran" an den Schrägförderer ziehen bzw. schieben kann. Der Wirkungsbereich eines solchen Raffers ist gegenüber im Stand der Technik üblichen Einzugswalzen deutlich vergrößert.

Die Führung des Raffers mittels der Führungseinrichtung erfolgt weiter vorzugsweise in solcher Art, dass während einer vollständigen Umdrehung des Kurbelarms um das Kurbeldrehgelenk zumindest eine Mehrzahl von Rafferzinken, vorzugsweise sämtliche Rafferzinken, zu jedem Zeitpunkt nach unten gerichtet orientiert sind. "Nach unten gerichtet" besagt in diesem Zusammenhang, dass sich die Zinkenspitzen der einzelnen Rafferzinken zu jedem Zeitpunkt während einer vollständigen Umdrehung des Kurbelarms vertikal unterhalb der Rafferbasis befinden, von der ausgehend sich die Rafferzinken erstrecken. Mithin weisen ausgehend von der Rafferbasis in Richtung der Zinkenspitzen der Rafferzinken erstreckende Vektoren zu jedem Zeitpunkt eine vertikal nach unten ausgerichtete Vektorkomponente auf. Diese Ausgestaltung hat den besonderen Vorteil, dass der Raffer mit seinen Rafferzinken kaum eine vertikal nach oben gerichtete Förderwirkung auf das Erntegut ausübt. Dies ist insbesondere bei im Stand der Technik typischen Einzugswalzen, die mit Einzugsfingern ausgestattet sind, problematisch, da dort das Erntegut mitunter erheblich vertikal nach oben beschleunigt und dadurch in einem Zwischenbereich zwischen der Einzugswalze und der Übergabeöffnung nach oben geworfen wird. Hierdurch kann es schlimmstenfalls zu Verstopfungen kommen, die eine Unterbrechung der Ernte erforderlich machen. Ebenfalls tritt es regelmäßig auf, dass Erntegut nach vorne über die übliche Einzugswalze ausgeworfen wird, was zu Verlusten und einem ungleichmäßigen Gutfluss führt. Die beschriebene durchgehend nach unten ausgerichtete Orientierung der Rafferzinken vermeidet hingegen zumindest weitestgehend eine derartige vertikale Beschleunigung nach oben, sodass das beschriebene typische "Aufwerfen" von Erntegut zumindest reduziert, vorzugsweise vollständig vermieden wird.

In einer weiterhin vorteilhaften Ausgestaltung ist der Raffer unter Einwirkung des Kurbelarms und der Führungseinrichtung bezogen auf eine zu der Längsachse des Schneidwerks senkrechte Ebene innerhalb eines Winkelbereichs zwischen 90° und 180°, vorzugsweise zwischen 100° und 160°, weiter vorzugsweise zwischen 110° und 140°, bewegbar. Der Winkelbereich beschreibt hierbei den Bereich, in dem sich der Raffer um die Gelenksachse des Rafferdrehgelenks während eines Betriebs des Mähdreschers rotatorisch bewegt.

Vorteilhafterweise ist die Führungseinrichtung mit mindestens einem Pendelstab ausgestattet, der an seinem einen Ende unter Ausbildung des Führungsdrehgelenks an dem Raffer und an seinem gegenüberliegenden anderen Ende unter Ausbildung eines Lagerdrehgelenks an einem, vorzugsweise festen, Lager angeordnet ist. Der Pendelstab, der auch als "Lenker" bezeichnet werden kann, ist besonders gut dazu geeignet, unter Fernbleiben einer Übertragung von Biegemomenten lediglich die gewünschte Führung bezogen auf den Raffer zu bewirken. Hierbei ist es insbesondere denkbar, dass der Pendelstab eine unveränderliche Länge aufweist, sodass der Raffer während seines Betriebs mittels des Kurbeltriebs durchgehend in einer eindeutigen Drehstellung geführt ist. Alternativ ist es ebenso denkbar, dass der Lenker in seiner Länge verstellbar ist, um Bauteiltoleranzen auszugleichen. Eine solche Verstellbarkeit kann ferner dazu genutzt werden, eine Bewegungsbahn der Rafferzinken einzustellen und im Einzelfall zu optimieren.

Schließlich kann eine solche Ausgestaltung besonders vorteilhaft sein, bei der bei Vorliegen des Raffers in seiner Förderstellung, in der sein horizontal sowie senkrecht zu der Längsachse des Schneidwerks gemessener Abstand zwischen seiner Rafferbasis und dem Schrägförderer minimal ist, Projektionen von Längsachsen von Rafferzinken des Raffers in die zu der Längsachse des Schneidwerks senkrechte Ebene mit einer Vertikalen, die in der genannten senkrechten Ebene angeordnet ist, ein Winkel von mindestens 40° einschließt. Vorzugsweise beträgt dieser Winkel mindestens 50°, weiter vorzugsweise mindestens 60°. Die beschriebene Ausgestaltung hat den Vorteil, dass der Raffer sich bei Vorliegen in seiner Förderstellung möglichst weit in Richtung des Schrägförderers erstreckt und entsprechend eine besonders gute Förderwirkung auf das Erntegut ausüben kann, d.h. letzteres besonders effektiv an den Schrägförderer übergeben kann. Im Unterschied dazu bricht die Förderwirkung bei im Stand der Technik üblichen Einzugswalzen vergleichsweise früh ab, da die Einzugsfinger solcher Einzugswalzen sich nicht so weit in Richtung auf den Schrägförderer zu bewegen können, wie dies mittels des "doppelt rotatorisch" gelagerten Raffers möglich ist.

Analog ist es zur Ausübung einer möglichst großen Förderwirkung ferner besonders von Vorteil, wenn bei Vorliegen des Raffers in seiner Aushohlstellung, in der sein horizontal sowie senkrecht zu der Längsachse des Schneidwerks gemessener Abstand zu den Schrägförderer maximal ist, die beschriebenen Projektionen der Längsachsen der Rafferzinken in die zu der Längsachse des Schneidwerks senkrechte Ebene gegenüber der Vertikalen ein Winkel von mindestens 40°, vorzugsweise mindestens 50°, weiter vorzugsweise mindestens 60°, einschließen. Diese Orientierung des Raffers bei Vorliegen in seiner Aushohlstellung ermöglicht ein weit greifendes Ausholen des Raffers, sodass mit jedem Umlauf des Raffers möglichst viel Erntegut erfasst und in Richtung des Schrägförderers bewegt werden kann.

Die Erfindung ist nachstehend anhand eines Ausführungsbeispiels, das in den Figuren dargestellt ist, näher erläutert. Es zeigt:
- Fig. 1:: Ein Querschnitt durch einen erfindungsgemäßen Mähdrescher,
- Fig. 2:: Eine perspektivische Ansicht eines Schneidwerks eines Mähdreschers gemäß dem Stand der Technik,
- Fig. 3:: Ein Detail einer als Raffer ausgebildeten Übergabeeinrichtung eines Schneidwerks des Mähdreschers gemäß Figur 1,
- Fig. 4:: Ein weiteres Detail wie in Figur 3, wobei sich jedoch der Raffer in einer anderen Stellung befindet,
- Fig. 5:: Ein idealisierter Querschnitt durch das Schneidwerk gemäß Figur 3, wobei sich der Raffer in einer Förderstellung befindet,
- Fig. 6:: Ein weiterer Querschnitt wie in Figur 5, wobei sich der Raffer in Aushohlstellung befindet,
- Fig. 7:: Eine idealisierte Ansicht eines Mittelbereichs des Schneidwerks gemäß Figur 3.

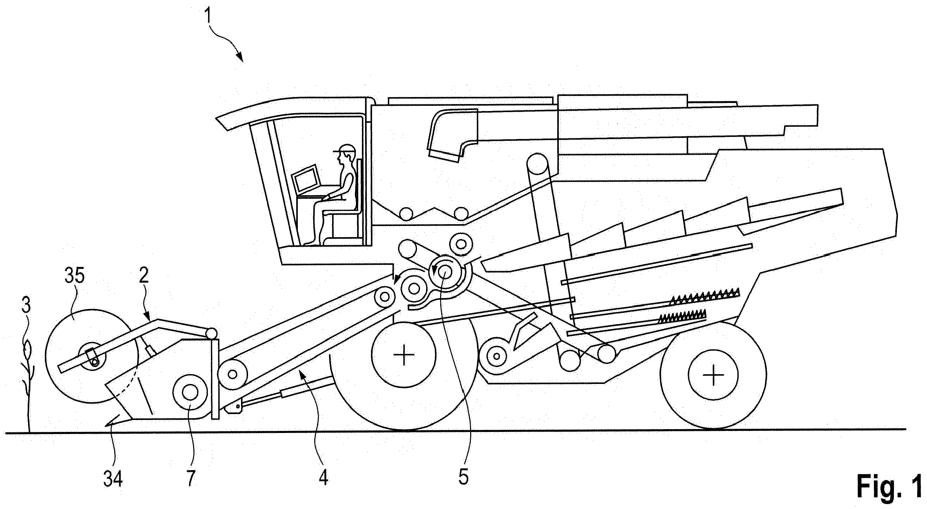

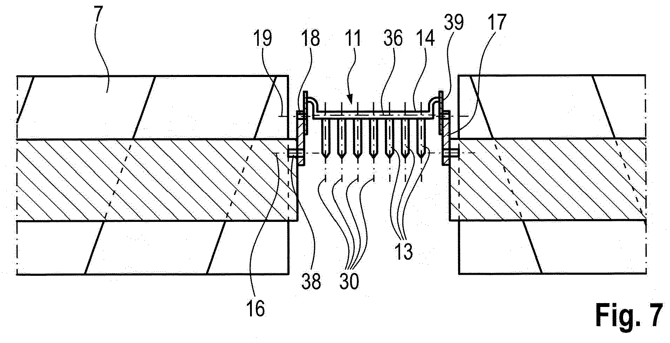

Ein Ausführungsbeispiel, das in den **Figuren 1** **sowie 3 bis 7** gezeigt ist, umfasst einen erfindungsgemäßen Mähdrescher **1,** der mit einem Schneidwerk **2** ausgestattet ist. Das Schneidwerk **2,** das einen Messerbalken **34** umfasst, dient dazu, auf einem Feld aufstehende Pflanzen **3** zu schneiden und an einen dem Schneidwerk **2** nachgeschalteten Schrägförderer **4** weiterzuleiten. Zur geordneten Ablage der geschnittenen Pflanzen **3** auf einem in den Figuren nicht näher bezeichneten Schneidtisch des Schneidwerks **2** verfügt letzteres über eine Haspel **35.** Das Schneidwerk **2** ist an dem Schrägförderer **4** aufgehängt, wobei eine Länge des Schneidwerks **2** eine Breite des Schrägförderers **4** deutlich übersteigt. Die Länge des Schneidwerks **2,** die eine Arbeitsbreite des Mähdreschers **1** definiert, führt dazu, dass die geschnittenen Pflanzen **3,** die das Erntegut bilden, vor einer Übergabe an den Schrägförderer **4** zunächst in Längsrichtung des Schneidwerks **6** mittig zusammengeführt werden müssen. Hierbei werden die geschnittenen Pflanzen **3** ausgehend von Seitenbereichen **8, 9** des Schneidwerks **2** einem Mittelbereich **10** zugeführt, von dem ausgehend die Übergabe des Ernteguts an den Schrägförderer **4** erfolgt. Mittels des Schrägförderers **4** wird das Erntegut sodann in Richtung eines Dreschorgans **5** weitergeleitet, mittels dessen eine weitere Verarbeitung des Ernteguts erfolgt.

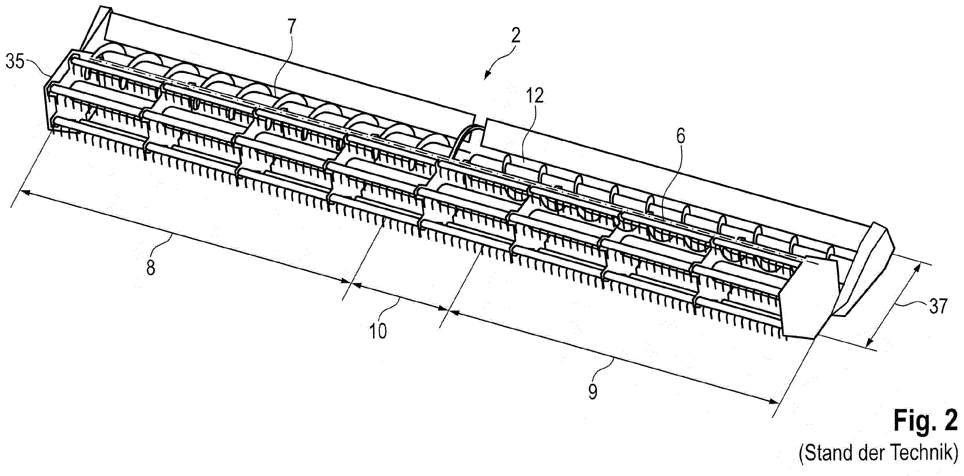

Zwecks Förderung der geschnittenen Pflanzen **3** in eine Richtung parallel zu einer Längsachse **6** des Schneidwerks **2** verfügt das Schneidwerk **2** über eine Fördereinrichtung **7,** die hier in Form einer Förderschnecke ausgebildet ist. Da die Förderung ausgehend von den einander gegenüberliegenden Seitenbereichen **8, 9** in entgegengesetzte Richtung erfolgen muss, damit das Erntegut jeweils den Mittelbereich **10** erreicht, weist die Fördereinrichtung **7** zwei entsprechende Förderabschnitte auf, in denen die Schneckenwindungen einander entgegengesetzt gewendelt ausgeführt sind. Dies ergibt sich besonders gut anhand von **Figur 2****,** die ein Schneidwerk **2** gemäß dem Stand der Technik zeigt. An einer dem Schrägförderer **4** zugewandten Rückseite des Schneidwerks **2** umfasst selbiges eine Übergabeöffnung **12,** durch die hindurch das in den Mittelbereich **10** zusammengeführte Erntegut an den Schrägförderer **4** übergebbar ist.

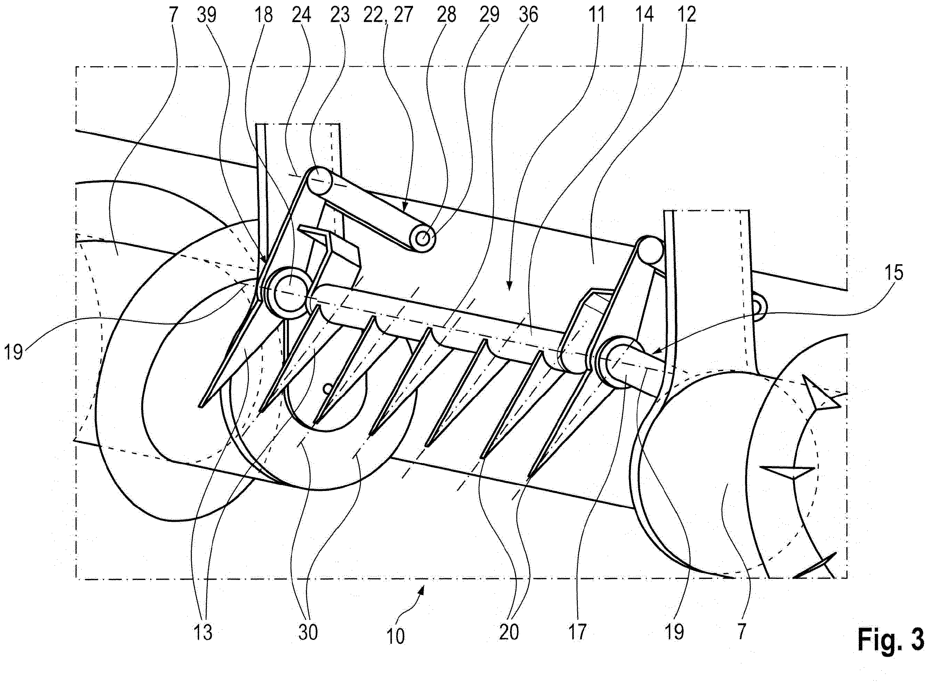

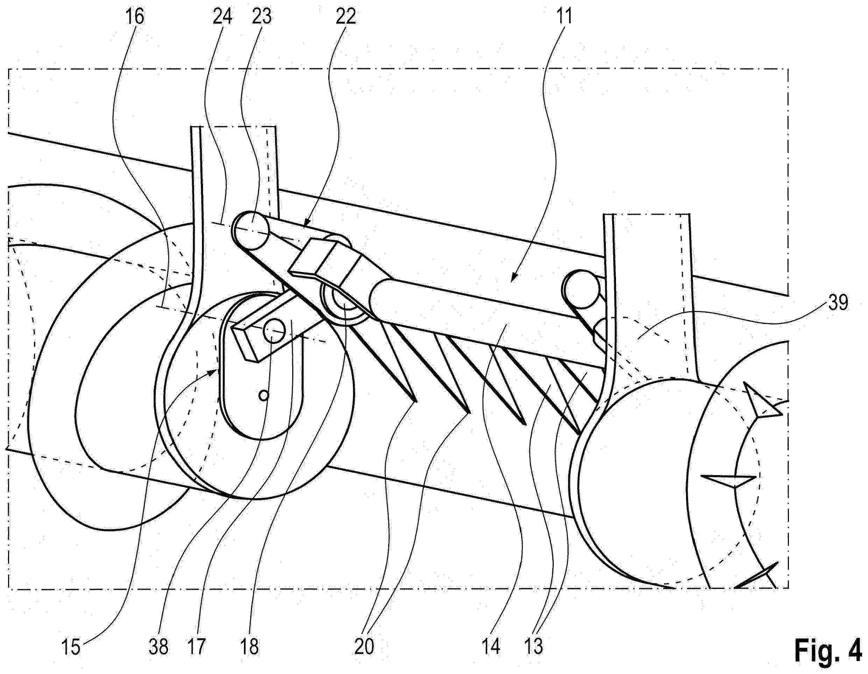

Für die Erfindung ist wesentlich, dass eine Übergabeeinrichtung, mittels der das Erntegut ausgehend von den Mittelbereich **10** des Schneidwerks **2** durch die Übergabeöffnung **12** hindurch an den nachgeordneten Schrägförderer **4** übergeben wird, von einem Raffer **11** gebildet ist. Dieser Raffer **11** ergibt sich besonders gut anhand der **Figuren 3** **und** **4****.** Der Raffer **11** ersetzt die im Stand der Technik übliche Einzugswalze und bewirkt die Förderung des Ernteguts mittels einer periodischen Bewegung, in deren Zuge der Raffer **11** mittels seiner Rafferzinken **13** das Erntegut erfasst und in Richtung des Schrägförderers **4** fördert. Hierbei wirkt der Raffer **11** mit einem Kurbeltrieb **15** zusammen, der einen um eine Kurbelachse **16** drehantreibbaren Kurbelarm **17** umfasst. Hierzu ist der Kurbelarm **17** mittels eines Kurbelarmgelenks **38** an eine starre Basis angeschlossen, sodass der Kurbelarm **17** auf einer Kreisbahn um die Kurbelachse **16** drehbar ist. An einem dem Kurbelarmgelenk **38** entgegengesetzten Ende des Kurbelarms **17** ist der Raffer **11** gelagert, und zwar unter Ausbildung eines Rafferdrehgelenks **18.** Das Rafferdrehgelenk **18** gibt eine Verdrehung des Raffers **11** um eine Gelenksachse **19** des Rafferdrehgelenks **18** frei. Auf diese Weise ist zum einen der Kurbelarm **17** verdrehbar um die Kurbelachse **16** sowie zum anderen der Raffer **11** verdrehbar um die Gelenkachse **19** des Rafferdrehgelenks **18** gelagert. Mithin ist der Raffer **11** mittels des Kurbelarms **17** als Ganzes auf einer Kreisbahn um das Kurbelarmgelenk **38** bewegbar. Die Kurbelachse **16** ist parallel zu der Längsachse **6** des Schneidwerks sowie beabstandet von der Längsachse **6** angeordnet.

Der Raffer **11** umfasst eine Rafferbasis **14,** die sich entlang einer Längsachse **36** des Raffers **11** erstreckt. Die Längsachse **36** ist parallel zu der Längsachse **6** des Schneidwerks **2** orientiert. Ausgehend von der Rafferbasis **14,** die hier mit einem kreisförmigen Querschnitt ausgebildet ist, erstreckt sich eine Mehrzahl von Rafferzinken **13,** die parallel zueinander orientiert und verteilt entlang der Längsachse **36** der Rafferbasis **14** angeordnet sind. Die Rafferzinken **13** sind hier in Form dreieckförmig spitz zulaufenden Zinken ausgebildet. Die Rafferbasis **14** ist jeweils seitlich unter Verwendung eines gekröpften Blechs an Seitenteile **39** des Raffers **11** angeschlossen, die jeweils ebenfalls einen Rafferzinken **13** aufweisen. Auf diese Weise umfasst der Raffer **11** insgesamt sieben Rafferzinken **13.**

Die Seitenteile **39** des Raffers **11** sind an einem dem jeweils zugehörigen Rafferzinken **13** abgewandten Ende jeweils mit einer Aufnahme versehen, die mit einer Führungseinrichtung **22** zusammenwirkt. Hierbei wirken der Raffer **11** und die Führungseinrichtung **22** unter Ausbildung eines Führungsdrehgelenks **23** zusammen, das eine relative Verdrehbarkeit des Raffers **11** zu der Führungseinrichtung **22** um eine Gelenkachse **24** des Führungsdrehgelenks **23** ermöglicht. Die Führungseinrichtung **22** umfasst hier einen Pendelstab **27,** der an seinem einen Ende mittels des genannten Führungsdrehgelenks **23** unter seinem anderen Ende unter Ausbildung eines Lagerdrehgelenks **28** an einem Lager **29** gelagert ist. Die doppelt gelenkige Anbindung des Pendelstabs **27** führt dazu, dass letzterer keine Biegemomente zwischen dem Lager **29** und dem Raffer **11** übertragen kann.

In gemeinsamer Wirkung des Kurbeltriebs **15,** des gelenkigen Anschlusses des Raffers **11** mittels des Rafferdrehgelenks **18** an dem Kurbelarm **17,** der Führungseinrichtung **22** und des gelenkigen Anschlusses der Führungseinrichtung **22** unter Ausbildung des Führungsdrehgelenks **23** an dem Raffer **11** ist der Raffer **11** im Zuge des Betriebs des Kurbeltriebs **15** um die Gelenkachse **19** relativ zu dem Kurbelarm **17** verdrehbar und hierbei infolge der Führung mittels des Pendelstab **27** in jeder Drehstellung des Kurbelarms **17** bezogen auf die Kurbelachse **16** in eine eindeutige Position zwingbar. Mit anderen Worten wird der Raffer **11** mittels der gezeigten Konstruktion im Zuge eines Betriebs des Mähdreschers **1** fortwährend periodisch auf einer in sich geschlossenen Kurvenbahn bewegt, wobei der Raffer **11** kontrolliert geführt ist.

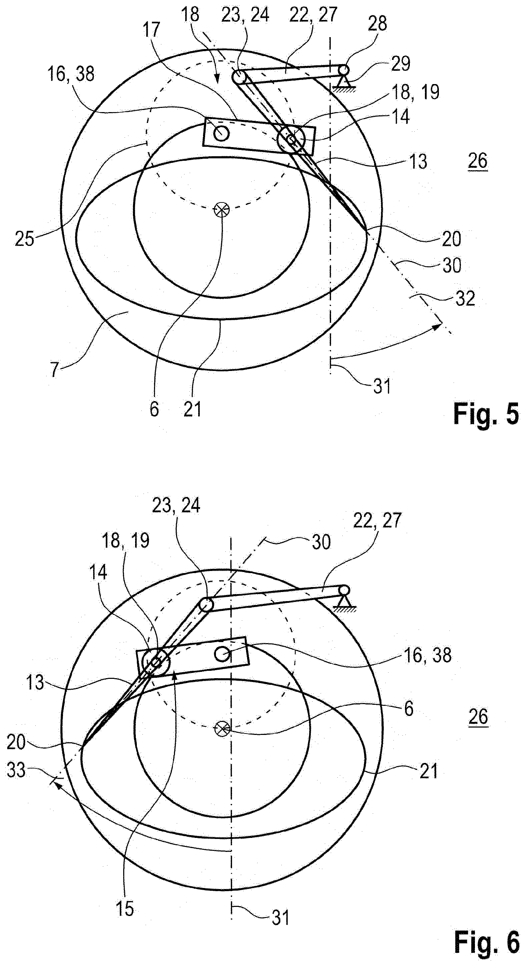

Die beschriebene Ausgestaltung ermöglicht schließlich, dass Zinkenspitzen **20** der Rafferzinken **13** infolge einer Überlagerung zweier Kreisbewegungen, nämlich zum einen derjenigen des Kurbelarms **17** um die Kurbelachse **16** sowie zum anderen des Raffers **11** um die Gelenkachse **19** des Rafferdrehgelenks **18,** entlang einer Kurvenbahn **21** führbar sind, die eine liegend ovale Form aufweist. Dies ergibt sich besonders gut anhand der **Figuren 5 und 6****.** Die Kurvenbahn **21** ist mithin derart ausgebildet, dass sie eine asymmetrische Ellipse formt, deren Hauptachse sich zumindest im Wesentlichen in Breitenrichtung **37** des Schneidwerks **2** erstreckt. Auf diese Weise bewirkt der Raffer **11** eine besonders ausgeprägte Förderwirkung auf das Erntegut, da die Rafferzinken **13** in Breitenrichtung **37** des Schneidwerks **2** betrachtet einen besonders großen Wirkungsbereich haben. Insbesondere kann der Raffer **11** auch noch in einem Nahbereich zu der Übergabeöffnung **12** wirken und dadurch das Erntegut weit in Richtung des Schrägförderer **4** schieben, in dem gemäß dem Stand der Technik die dort üblichen Einzugsfinger einer Einzugswalze bereits nicht mehr wirken können. Ein Gutfluss des Ernteguts ist mithin mittels der als Raffer **11** ausgebildeten Übergabeeinrichtung besonders gut.

In dem gezeigten Beispiel sind der Kurbeltrieb **15** und die Führungseinrichtung **22** derart bezogen auf den Raffer **11** ausgebildet, dass die Rafferzinken **13** während eines Betriebs des Kurbeltriebs **15** durchgehend "nach unten" gerichtet sind. Hierunter ist in Anlehnung an die **Figuren 5 und 6** zu verstehen, dass die Zinkenspitzen **20** der Rafferzinken **13** unabhängig von einer Stellung des Raffers **11** in jedem Fall vertikal unterhalb der Rafferbasis **14** angeordnet sind. Anders ausgedrückt weisen von der Rafferbasis **14** hin zu den Zinkenspitzen **20** der Rafferzinken **13** erstreckende Vektoren in jedem Fall einen vertikal nach unten gerichteten vektoriellen Anteil auf. Hierbei bewegt sich eine Neigung des Raffers **11** gegenüber einer Vertikalen **31** in dem gezeigten Beispiel bezogen auf eine zu der Längsachse **6** des Schneidwerks **2** senkrechten Ebene **26** in einem Winkelbereich von ca. 120°. Dabei ist der Raffer **11** in seinen beiden extremalen Positionen bezogen auf die Übergabeöffnung **12** jeweils am stärksten gegenüber der Vertikalen **31** geneigt.

Dies betrifft zum einen eine Förderstellung des Raffers **11,** die sich aus **Figur 5** ergibt. In dieser Förderstellung befinden sich die Rafferzinken **20** an einer Stelle ihrer Kurvenbahn **21,** die am nächsten zu der Übergabeöffnung **12** bzw. dem Schrägförderer **4** angeordnet ist. Bei Vorliegen in der Förderstellung schließen Längsachsen **30** der Rafferzinken **13** und die Vertikale **31** - gemeinsam in die senkrechte Ebene **26** projiziert betrachtet - einen Winkel **32** ein, der hier ca. 60° beträgt.

Genau umgekehrt ist der Raffer **11** bei Vorliegen in seiner Aushohlstellung, die sich besonders gut anhand von **Figur 6** ergibt, derart gegenüber der Vertikalen **31** geneigt, dass die Längsachsen **30** gegenüber der Vertikalen **31** sich unter einem Winkel **33** von ebenfalls ca. 60° erstrecken. Hierbei versteht es sich, dass die Winkel **32, 33,** die die Längsachsen **30** der Rafferzinken **13** bezogen auf die Vertikale **31** einschließen, gegenüber der Vertikalen **31** zu entgegengesetzten Seiten ausgebildet sind. Im Zuge eines Umlaufs des Raffers **11** führt selbiger mithin mittels seiner Rafferzinken **13** gewissermaßen eine Schaufelbewegung aus, bei der die Rafferzinken **13** ausgehend von der Aushohlstellung das Erntegut erfassen und sodann in Richtung des Schrägförderers **4** schaufeln.

### Bezugszeichenliste

- 1: Mähdrescher
- 2: Schneidwerk
- 3: Pflanze
- 4: Schrägförderer
- 5: Dreschorgan
- 6: Längsachse
- 7: Fördereinrichtung
- 8: Seitenbereich
- 9: Seitenbereich
- 10: Mittelbereich
- 11: Raffer
- 12: Übergabeöffnung
- 13: Rafferzinken
- 14: Rafferbasis
- 15: Kurbeltrieb
- 16: Kurbelachse
- 17: Kurbelarm
- 18: Rafferdrehgelenk
- 19: Gelenkachse
- 20: Zinkenspitze
- 21: Kurvenbahn
- 22: Führungseinrichtung
- 23: Führungsdrehgelenk
- 24: Gelenkachse
- 25: Kurvenbahn
- 26: Ebene
- 27: Pendelstab
- 28: Lagerdrehgehlenk
- 29: Lager
- 30: Längsachse
- 31: Vertikale
- 32: Winkel
- 33: Winkel
- 34: Messerbalken
- 35: Haspel
- 36: Längsachse
- 37: Breitenrichtung
- 38: Kurbelarmgelenk
- 39: Seitenteil

## Patentansprüche

1. Mähdrescher (1), umfassend
- ein Schneidwerk (2) zum Schneiden und Weiterleiten von auf einem Feld aufstehenden Pflanzen (3) sowie
- einen Schrägförderer (4) zur Förderung der Pflanzen in Richtung eines Dreschorgans (5),
wobei das Schneidwerk (2) mindestens eine sich parallel zu einer Längsachse (6) des Schneidwerks (2) erstreckende Fördereinrichtung (7) aufweist, mittels der geschnittene Pflanzen ausgehend von Seitenbereichen (8, 9) des Schneidwerks (2) in Richtung eines Mittelbereichs (10) des Schneidwerks (2) förderbar sind,
wobei das Schneidwerk (2) mindestens eine Übergabeeinrichtung aufweist, mittels der geschnittene Pflanzen ausgehend von dem Mittelbereich (10) an den Schrägförderer (4) übergebbar sind,
**dadurch gekennzeichnet, dass**
die Übergabeeinrichtung in Form eines Raffers (11) ausgebildet ist, der dazu eingerichtet ist, die geschnittenen Pflanzen anzunehmen und an den Schrägförderer (4) zu übergeben.

2. Mähdrescher (1) nach Anspruch 1, **dadurch gekennzeichnet, dass** der Raffer (11) eine Mehrzahl von Rafferzinken (13) aufweist, die jeweils einseitig an einer Rafferbasis (14) gelagert sind, wobei vorzugsweise sich die Rafferzinken (13) ausgehend von der Rafferbasis (14) parallel zueinander erstrecken.

3. Mähdrescher (1) nach Anspruch 2, **dadurch gekennzeichnet, dass** die Rafferbasis (14) von einem langgestreckten Stab gebildet ist, wobei die Rafferzinken (13) entlang der Rafferbasis (14) verteilt angeordnet sind und sich ausgehend von der Rafferbasis (14) in dieselbe Richtung erstrecken.

4. Mähdrescher (1) nach einem der vorhergehenden Ansprüche, **dadurch gekennzeichnet**, das der Raffer (11) mit einem Kurbeltrieb (15) zusammenwirkt, der einen um eine Kurbelachse (16) drehantreibbaren Kurbelarm (17) umfasst, wobei der Raffer (11) unter Ausbildung eines Rafferdrehgelenks (18) an dem Kurbelarm (17) gelagert ist, wobei vorzugsweise eine Gelenkachse (19) des Rafferdrehgelenks (18) parallel zu sowie beabstandet von der Kurbelachse (16) angeordnet ist.

5. Mähdrescher (1) nach den Ansprüchen 2 und 4 oder 3 und 4, **dadurch gekennzeichnet, dass** der Raffer (11) mittels des Kurbeltriebs (15) derart bewegbar ist, dass von der Rafferbasis (14) abgewandte Zinkenspitzen (20) der Rafferzinken (13) periodisch auf einer in sich geschlossenen, vorzugsweise ellipsenförmigen, Kurvenbahn (21) führbar sind.

6. Mähdrescher (1) nach einem der Ansprüche 4 oder 5, **dadurch gekennzeichnet, dass** die Kurbelachse (16) parallel zu der Längsachse (6) des Schneidwerks (2) orientiert ist.

7. Mähdrescher (1) nach einem der Ansprüche 4 bis 6, **gekennzeichnet durch** eine Führungseinrichtung (22), die unter Ausbildung eines Führungsdrehgelenks (23) an den Raffer (11) angeschlossen ist, wobei die Gelenkachsen (19, 24) des Rafferdrehgelenks (18) und des Führungsdrehgelenks (23) parallel zueinander orientiert sowie voneinander beabstandet sind.

8. Mähdrescher (1) nach Anspruch 7, **dadurch gekennzeichnet, dass** der Raffer (11) mittels des Kurbeltriebs (14) auf einer Kurvenbahn (25) geführt ist, wobei der Raffer (11) infolge seiner Führung mittels der Führungseinrichtung (22) in Abhängigkeit von einer Winkelstellung des Kurbelarms (17) in einer eindeutig bestimmten Drehstellung bezogen auf das Rafferdrehgelenk (18) vorliegt.

9. Mähdrescher (1) nach Anspruch 8, **dadurch gekennzeichnet, dass** der Raffer (11) derart geführt ist, dass während einer vollständigen Umdrehung der Kurbelarms (17) zumindest eine Mehrzahl von Rafferzinken (13) des Raffers (11), vorzugsweise sämtliche Rafferzinken (13), die sich ausgehend von einer Rafferbasis (14) erstrecken, zu jedem Zeitpunkt nach unten ausgerichtet sind, sodass sich jeweils von der Rafferbasis (14) in Richtung von Zinkenspitzen (20) der Rafferzinken (13) erstreckende Vektoren eine vertikal nach unten ausgerichtete Vektorkomponente aufweisen.

10. Mähdrescher (1) nach einem der Ansprüche 7 bis 9, **dadurch gekennzeichnet, dass** der Raffer (11) unter Einwirkung des Kurbelarms (17) und der Führungseinrichtung (22) bezogen auf eine zu der Längsachse (6) des Schneidwerks (2) senkrechte Ebene (26) innerhalb eines Winkelbereichs zwischen 90° und 180°, vorzugsweise zwischen 100° und 160°, weiter vorzugsweise zwischen 110° und 140°, bewegbar ist, sodass der Raffer (11) im Zuge eines Betriebs des Kurbeltriebs (15) eine kombinierte translatorischrotatorische Bewegung ausführt.

11. Mähdrescher (1) nach einem der Ansprüche 7 bis 10, **dadurch gekennzeichnet, dass** die Führungseinrichtung (22) mindestens einen Pendelstab (27) umfasst, der an seinem einen Ende unter Ausbildung des Führungsdrehgelenks (23) an dem Raffer (11) und an seinem anderen Ende unter Ausbildung eines Lagerdrehgelenks (28) an einem Lager (29) befestigt ist.

12. Mähdrescher (1) nach einem der vorhergehenden Ansprüche, **dadurch gekennzeichnet, dass** der Raffer (11) bei Vorliegen in einer Förderstellung, in der ein horizontal sowie senkrecht zu der Längsachse (6) des Schneidwerks (2) gemessener Abstand zwischen einer Rafferbasis (14) und dem Schrägförderer (4) minimal ist, Projektionen von Längsachsen (30) von Rafferzinken (13) des Raffers (11) in die zu der Längsachse (6) des Schneidwerks (2) senkrechte Ebene (26) gegenüber mit einer in dieser Ebene (26) angeordneten Vertikalen (31) einen Winkel (32) von mindestens 40°, vorzugsweise mindestens 50°, weiter vorzugsweise mindestens 60°, einschließen.

13. Mähdrescher (1) nach einem der vorhergehenden Ansprüche, **dadurch gekennzeichnet, dass** der Raffer (11) bei Vorliegen in einer Ausholstellung, in der ein horizontal sowie senkrecht zu der Längsachse (6) des Schneidwerks (2) gemessener Abstand zwischen einer Rafferbasis (14) und dem Schrägförderer (4) maximal ist, Projektionen von Längsachsen (30) von Rafferzinken (13) des Raffers (11) in die zu der Längsachse (6) des Schneidwerks (2) senkrechte Ebene (26) gegenüber mit einer in dieser Ebene (26) angeordneten Vertikalen (31) einen Winkel (33) von mindestens 40°, vorzugsweise mindestens 50°, weiter vorzugsweise mindestens 60°, einschließen.
